# EUROPEAN PATENT APPLICATION

(11) **EP 1 686 803 A1**
(43) Date of publication of application: **02.08.2006**
(21) Application number: 05250545.0
(22) Date of filing: 01.02.2005
(51) Int. Cl.: H04N 7/16, H04H 1/00

(54) **Addressable broadcast receiver and apparatus**

(71) Applicant: SONY UNITED KINGDOM LIMITED, Weybridge, Surrey KT13 0XW (GB)
(72) Inventor: Fuchs, Michael, 80802 München (DE); Heider, Frank, 82110 Germering (DE); Machacek, Marek, 81927 München (DE)
(74) Representative: Smith, Samuel Leonard

(57) **Abstract**

A broadcast receiver including an address memory (34) arranged to store a device address, a user interface (32) arranged to allow entry of a device address (34), a controller (30) for storing an entered device address in the address memory (34) and a receiver (36) for receiving a broadcast stream of data wherein the controller (30) is responsive to data in the broadcast stream which is received in association with a device address matching the device address stored in the address memory (34) and a broadcast apparatus including a broadcast device (48) for broadcasting a broadcast stream of data, an address generator (44) arranged to generate a unique device address, a user interface (40) arranged to receive requests for device addresses and a controller (42) arranged to operate the address generator (44) to generate a device address in response to a request to the user interface (40) wherein the user interface (40) is arranged to provide a device address generated by the address generator (44) in response to the request and the broadcast device (48) is arranged to broadcast at least some data in association with device addresses included in the broadcast stream. In this way it is possible to register a broadcast receiver in a broadcast system so as to enable a broadcast transmitter to provide data in a unidirectional manner to the broadcast receiver. A device address is requested for identifying a broadcast receiver. The device address is received and stored in a substantially permanent memory of the respective broadcast receiver such that the broadcast receiver is then able to receive data blocks including device addresses, to interpret the data blocks and process only those data blocks with the device address of the respective broadcast receiver.

## Description

The present application relates to a broadcast receiver and apparatus and, more particularly, to a system that allows the broadcast receiver to receive information in the broadcast stream intended specifically for it.

Previously, in various networks, it has been known to send information to particular devices by means of hardware addresses, such as network adapter addresses, special-purpose chips, BIOS chips, etc.

EP-A-1 217 497 concerns a security system for game devices connected to a server. When the game device accesses the server via a communication network, the server issues a device ID based on the time and date when the game device accessed the server. The server then associates a serial number of a CD-ROM used in the game device with the device ID and registers them in a database so as to manage which CD-ROM is used in each game device.

US 2002/0144126 A1 concerns a system in which, when an electronic device is used for the first time, it requires the input of a device code. When the electronic device is purchased, the serial number of the device is provided to a database so as to obtain the appropriate device code to enable the device.

These earlier arrangements have the disadvantage of requiring the use of a back-channel allowing two-way communication with the server and/or requiring the use of the serial number of the device.

An object of the present invention is to provide an arrangement whereby a broadcast receiver is not required to have a back-channel, does not need to use its serial number or other address defined upon manufacture and yet still can be addressed within a broadcast network.

According to the present invention, there is provided a method of broadcasting services selectively to individual broadcast receivers including:
allocating a device address to a broadcast receiver; and
providing the device address to the broadcast receiver and to a broadcast transmitter such that the broadcast transmitter can broadcast at least some data in association with device addresses in the broadcast stream.

According to the present invention, there is also provided a method of registering a broadcast receiver in a broadcast system so as to enable a broadcast transmitter to provide data in a unidirectional manner to the broadcast receiver, the method including:
requesting a device address for identifying a broadcast receiver;
receiving a device address generated in response to the request; and
storing the device address in a substantially permanent memory of the respective broadcast receiver wherein the broadcast receiver is able to receive data blocks including device addresses, to interpret said data blocks and to process only those data blocks with the device address of the respective broadcast receiver.

In this way, it is not necessary for the broadcast receiver to have any back-channel or Internet-like connection to the broadcast provider. A user merely requests a device address and then may enter that into the device in question. The broadcast service provider can store a user profile identifying the user with the device address and then broadcast selectively data to appropriate devices according to their device addresses. The broadcast receivers identify data intended for them according to device addresses included in the broadcast stream of data.

In order to obtain a device address, it is not necessary to remember or use any serial number or similar and there is no need for the device itself to send any communication to the broadcast service provider.

According to the present invention, there is also provided a broadcast receiver including:
an address memory arranged to store a device address;
a user interface arranged to allow entry of a device address;
a controller for storing an entered device address in the address memory; and
a receiver for receiving a broadcast stream of data; wherein
the controller is responsive to data in the broadcast stream which is received in association with a device address matching the device address stored in the address memory.

In this way, a user is able to provide the broadcast receiver with a device address without the broadcast receiver needing to send any communication to a broadcast service provider. No Internet connection is necessary and no hardware or BIOS address is necessary. The device address is independent of any serial number of the broadcast receiver and, hence, it is not necessary to remember serial numbers or similar in order to obtain the device address. By using the device address, the broadcast receiver is able to distinguish data in the broadcast stream intended for it.

Preferably, as delivered, the address memory does not contain a device address.

In other words, the broadcast receiver is manufactured and supplied without a device address. A user can obtain a device address from the broadcast service provider at any time and enter this device address into the broadcast receiver using the user interface.

Preferably, the device address is not related to any serial number of the broadcast receiver.

The device address may be any suitable address, such as numeric digits, which can be entered easily by a user using the user interface.

Preferably, the user interface is arranged to provide a menu for a display, the menu guiding a user to enter the device address.

Thus, the broadcast receiver may be arranged to include a function for entering a device address. Having initiated that function, the user interface provides a suitable output for driving the display to display a menu for guiding the user. In the case of a television device, the display may be the television screen.

Preferably, the user interface is arranged to provide for manual entry of the device address.

In this way, the broadcast receiver does not have any interface or communication output for a back-channel. The user is able to use keys of the broadcast receiver to enter the required device address.

Preferably, where the broadcast receiver includes a remote control device, the user interface is arranged to accept entry of the device address using the remote control device.

Thus, the standard keys of the remote control device can be used to enter the device address.

Preferably, the address memory is resistant to software updates and operations to restore device settings to original factory settings.

In this way, once a broadcast receiver has been allocated with a device address, that device address can be maintained irrespective of how the broadcast receiver is used. For instance, due to a malfunction or merely the desire of the user, it may be necessary to reset all of the settings of the broadcast receiver. According to this feature, despite this resetting operation, the device address will be maintained.

Preferably, the device addresses are provided according to a predetermined scheme, for instance using a magic number, eg as part of a check digit scheme. Preferably, the controller is arranged to check an entered device address to confirm that it adheres to the scheme and, hence, validate the device address as a correct device address.

During entry of a device address, it is possible that the user will make an error. Operating the controller in this way reduces significantly the chances that such an erroneous device address will be considered by the broadcast receiver as a true device address.

Preferably, the broadcast receiver can also be used to receive subscription services. To do this, it may be necessary to provide the broadcast receiver with a particular subscription key for a respective service. Preferably, the broadcast receiver is provided with a key memory arranged to store a subscription key and a decryption processor for decrypting data received by the broadcast receiver, wherein the user interface is additionally arranged to allow entry of a subscription key, the controller is arranged to store an entered subscription key in the key memory and the decryption processor decrypts data using the subscription key stored in the key memory.

In this way, subscription keys may be provided to a broadcast receiver. By allowing entry of the subscription keys in this way to the broadcast receiver, it is not necessary to provide a back-channel and the like. Furthermore, the broadcast service provider can link the device address and any stored user profile with issued subscription keys.

Hence, preferably, subscription keys are bound to the device address.

Preferably, the device address is provided in a coded form and the user interface is arranged to allow entry of a device address in the coded form.

Preferably, the controller is arranged to decode the device address in the coded form to derive the device address itself.

Preferably, the controller is arranged to control a recording device and, responsive to recording instruction data received in the broadcast stream in association with a device address matching the device address stored in the address memory, to operate the recording device. The broadcast receiver may additionally include the recording device operable under control of the controller.

According to the present invention, there is also provided a method of reconfiguring a broadcast receiver having a device memory, a user interface, a controller, and a receiver to form a broadcast receiver as described above, the method including:
assigning at least part of the device memory to operate as the address memory and store a device address,
arranging the user interface to allow entry of a device address; and
arranging the controller to respond to data in the broadcast stream which is received in association with a device address matching the device address stored in the address memory.

Thus, the present invention may provide a method of operating a recording device according to recording instruction data in the broadcast stream.

According to the present invention there is also provided a broadcast apparatus including:
a broadcast device for broadcasting a broadcast stream of data;
an address generator arranged to generate a unique device address;
a user interface arranged to receive requests for device addresses; and
a controller arranged to operate the address generator to generate a device address in response to a request to the user interface; wherein
the user interface is arranged to provide a device address generated by the address generator in response to the request; and
the broadcast device is arranged to broadcast at least some data in association with device addresses included in the broadcast stream.

In this way, a device address can be obtained without direct communication from a broadcast receiver to the broadcast apparatus, no back-channel is required and the user need not provide a serial number or other specific information of the broadcast receiver.

Where subscription services are provided, the broadcast device is preferably arranged to broadcast at least some services in an encoded form needing respective subscription keys for decoding and the user interface is additionally arranged to receive requests for subscription keys for subscriptions to respective services broadcast by the broadcast device. The controller is preferably arranged to control issue of subscription keys in connection with device addresses of users requesting the subscription keys and the user interface is arranged to provide subscription keys for respective device addresses.

In this way, a user can be provided with an appropriate subscription key without the need for any back-channel from the broadcast receiver.

Preferably, the broadcast apparatus includes a memory for storing a plurality of user profiles, each including a device address and details regarding the respective user.

The memory may also store a record of subscription keys issued in conjunction with respective user profiles and device addresses.

Preferably, the controller is arranged to code the device address such that the user interface provides the device address in a coded form.

A system may be provided including a broadcast service provider having the apparatus described above in conjunction with a plurality of broadcast receivers as described above.

The present invention may also be implemented in software having program code means causing a broadcast receiver to operate as defined above. Software may similarly be provided to reconfigure an existing device to operate as defined above. The software may be provided on a computer-readable medium or data carrier such as a CD-ROM or alternatively may be transmitted or broadcast to the end user. Hence, the present invention may be implemented as a signal representative of the computer program and suitable for reception by broadcast receivers, the computer program operable to reconfigure respective broadcast receivers. This includes over-the-air downloads as well as the ability for a user to download the program from an external source, such as an internet site, and transfer it to their receiver/recorder. This may be achieved for instance with a serial cable and corresponding input socket on the receiver/recorder.

The invention will be more clearly understood from the following description, given by way of example only, with reference to the accompanying drawings in which:
Figures 1(a), (b) and (c) illustrate broadcast receivers that can embody the present invention;
Figure 2 illustrates schematically a system embodying the present invention;
Figure 3 illustrate schematically a broadcast receiver embodying the present invention; and
Figure 4 illustrates schematically a broadcast apparatus embodying the present invention.

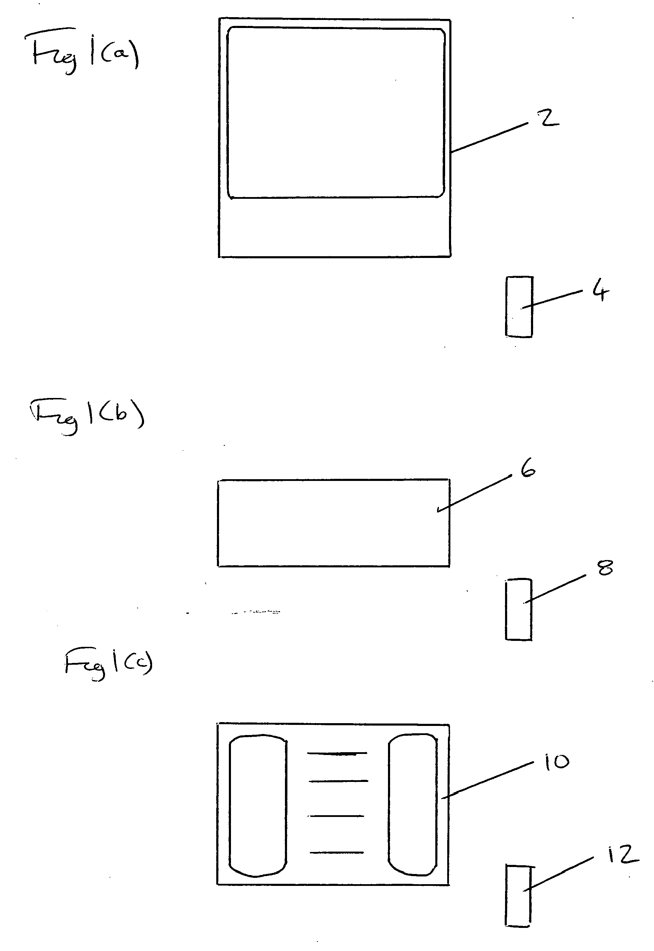

The present invention relates to providing a broadcast receiver device with an address such that it can be addressed individually within a broadcast transmission network. It is intended that the invention could be applied to any broadcast-type environment and, hence, used with a variety of different broadcast receivers. Figures 1(a), (b) and (c) illustrate a few of the possible broadcast receivers that can be used with the present invention.

Figure 1(a) illustrates schematically a television display device with an associated remote control 4. The television display device 2 can incorporate various digital receiving and decoding functionality as well as recording functionality.

Figure 1(b) illustrates a television receiving and recording device with an associated remote control 8. The recording device can be a hard disk video recorder, DVD-R deck or similar.

Finally, it will be noted that the present invention can also be applied to audio broadcast and Figure 1(c) illustrates an integrated radio receiver 10, such as a DVB or DAB receiver, together with an associated remote control device 12.

For reasons of cost, most broadcast receiver devices such as described above have no back-channel capabilities. In other words, these devices are not able to communicate with a broadcast apparatus or its associated broadcast server by means of another channel, such as the Internet.

The present application recognises that it would be very advantageous for the broadcast service provider to be able to address individually the broadcast receivers as discussed above. If the receivers have their own addresses, it is possible for the broadcast service provider to send information to a receiver specifically for use by that receiver. Where a user has expressed a preference to the broadcast service provider, the broadcast service provider could send user-appropriate programme guides or, in the case of a recorder, send recording instructions and messages in the broadcast stream to initiate recording. By means of the present invention, a recording device, such as described above, may be operated according to recording instruction data in the broadcast stream.

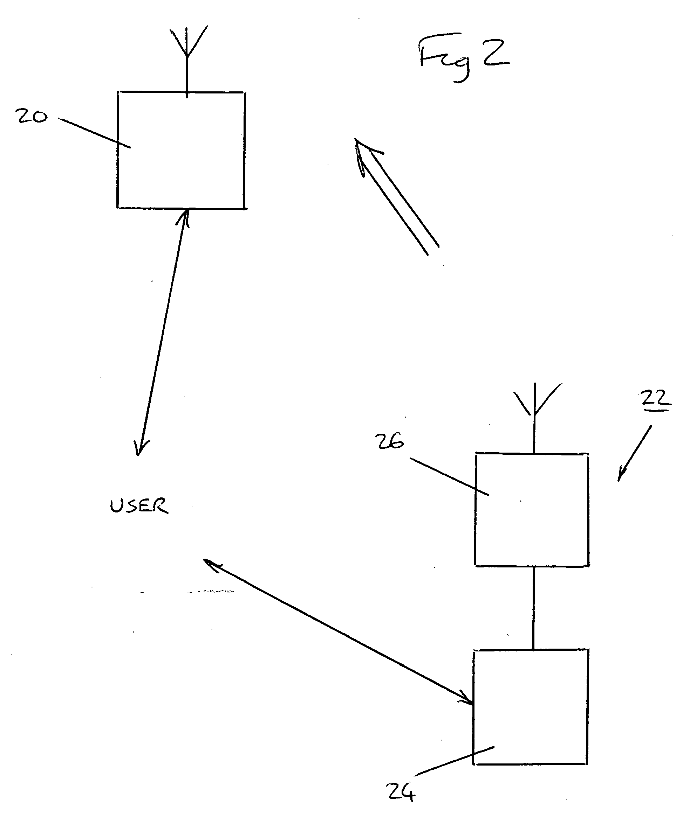

The overall system will be explained with reference to Figure 2.

The user of a broadcast receiver 20 first obtains an appropriate device address from the broadcast apparatus 22.

In particular, the user contacts what will be described as a the Device Address and Subscription Server (DASS) 24 to request a device address. Although the user may be required to provide user profile data, for instance his/her name and address and possibly the general type of the broadcast receiver 20, there is no need to provide a serial number or other specific identification information of the broadcast receiver. The user can contact the DASS 24 by means of a communication channel such as the Internet. However, it is sufficient for the purposes of the present invention to use any form of communication, including a call centre, SMS, postcards, etc. Data, video or audio messages relating to the user subscription status and advertising messages may also be sent. Since the broadcast service provider may hold data such as demographic data relating to the subscription or subscriber, targeted advertising messages may be sent. If a user profile is implemented on the receiver device, the profile may control which messages are displayed or otherwise communicated to the user.

The DASS 24 then issues a unique device address to the user. Again, communication of this device address to the user can be by any suitable communication channel.

The device address may be provided to the user as is, ie in an uncoded form. However, preferably, the device address is provided to the user in a coded form such that the user is not aware of the actual device address which has been issued for the broadcast receiver 20. This improves security of the overall system and makes it much more difficult for device addresses to be used for unauthorised purposes.

By way of example, the user may be issued with a hash of the device address, ie a compressed version of the device address. For instance, a 32-bit address is converted to ten digits which are provided to the user.

The user then enters the device address into the broadcast receiver 20 by means of an appropriate user interface to be described below. Preferably, the device address is a relatively straightforward address, such as a decimal string, which can be entered easily into the broadcast receiver, for instance using a remote control, such as one of the remote controls 4, 8 and 12 described above.

Thus, in the example given above, where the address is provided in a coded form, the user enters the coded address and the broadcast receiver 20 decodes this to obtain the required device address. Where ten digits are entered by the user, these can be expanded/converted by software into a 32-bit address. A user may enter a hash, for instance the ten decimal digits, of the actual device address. Software then applies a secure hash algorithm (key) to reverse the hash function and generate, for example, the 32-bit address.

The ability of the broadcast receiver 20 to decode the coded address may be built in at the time of manufacture or provided retrospectively. It may be provided as software which can be loaded into the device.

The broadcast receiver 20 stores the device address (coded and/or uncoded) in a permanent memory which is preferably resistant to "updating" and "reset to factory" operations.

In this way, the broadcast receiver 20 is provided with a unique address and can be targeted specifically by the broadcast apparatus 22. The broadcast apparatus 22 includes a database of user profiles and their corresponding device addresses such that, when the broadcast transmitter 26 of the broadcast apparatus 22 broadcasts a stream of data, at least some of that data can be associated with one or more particular device addresses such that only the broadcast receivers 20 having those addresses will respond to that data.

The arrangement is highly advantageous since the broadcast receivers 20 can be manufactured and delivered without any special device addresses either in hardware or in software. This significantly reduces the production costs. Similarly, the broadcast receiver 20 does not require any special software algorithm in order to produce the device address and the broadcast receiver does not require any back-channel to obtain the device address. Of course, where the device address is provided in a coded form, the broadcast receiver 20 requires appropriate decoding software, but this is relatively straightforward. There is no need to remember a serial number or any other unique number from the broadcast receiver 20 in order to obtain a device address. Registration, in order to obtain a new device address, can be carried out without having access to the broadcast receiver 20, for instance from home or office, and the device address is transferable to a new device, for instance in case of exchange under warranty.

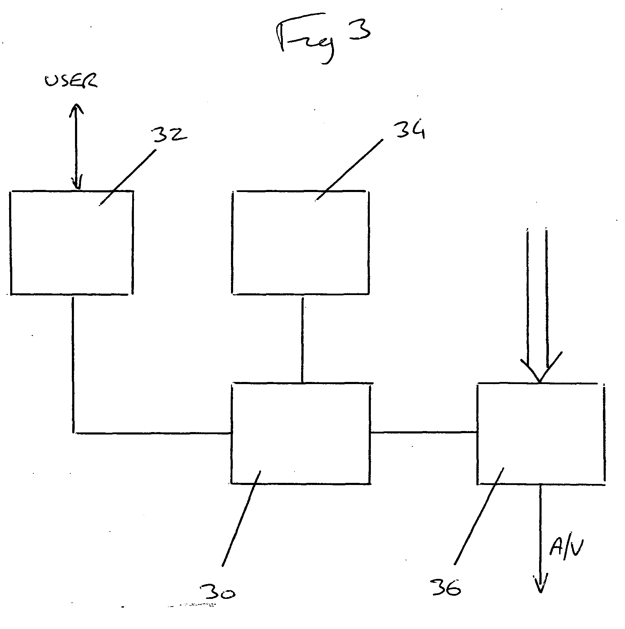

The functional components of the broadcast receiver 20 will now be described with reference to the schematic representation of Figure 3.

A controller 30 communicates with a user interface 32 and a memory 34. The user interface 32 can include any appropriate or well-known input keys, for instance as might be found on a remote control unit, and may additionally be provided with a display or means to control a display. Hence, in the case of a television device, the user interface 32 may include an output for the television display.

Using the user interface 32, a user is able to input a device address into the broadcast receiver. In a preferred embodiment, the user interface 32, possibly under the control of the controller 30, provides a menu by which the user may navigate to input the appropriate device address. As mentioned above, the input keys of a remote control unit may be used to enter the device address either directly or in a coded form. The controller 30 then stores in the memory 34 the entered device address. Preferably, to avoid the storage of an invalid device address, a magic number is coded in the device address to allow the broadcast receiver to validate the address. In this way, the controller 30 may check that the entered device address is a valid address.

In a known manner, the broadcast receiver will also include a receiving unit 36 for receiving a broadcast stream. The receiving unit may include various demodulation and/or decryption components and provides suitable audio/video output under the control of the controller 30.

As mentioned above, some of the information in the broadcast stream can be associated with one or more device addresses. Where the broadcast stream refers to the device address stored in the memory 34 for the respective broadcast receiver, the controller 30 and receiver 36 will act together to take the appropriate action. The additional information could be merely additional information for the audio/video output intended specifically for the broadcast receiver, for instance a personalised EPG. In the case of a broadcast receiver including recording components, the information could be used to initiate such recording.

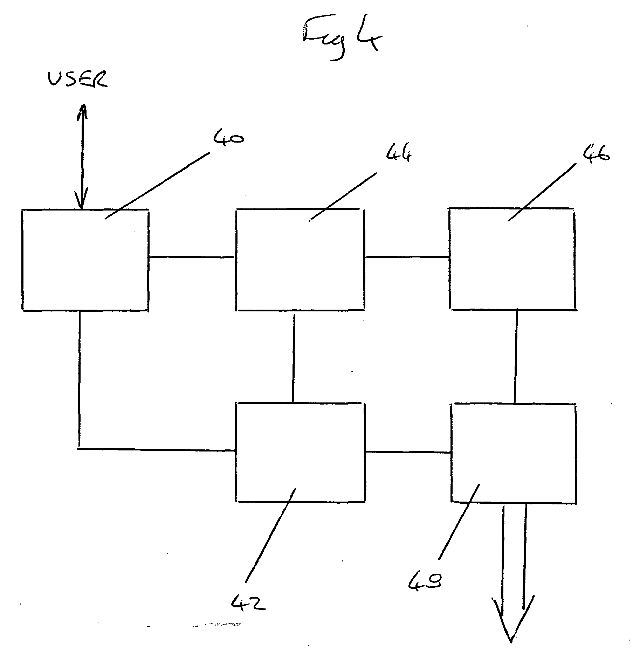

As illustrated in Figure 4, the broadcast apparatus includes a user interface 40. As described above, communication with the user can take place via the Internet, a call centre, SMS, postcards, etc. In a preferred embodiment, the user is required to provide information for a user profile. A controller 42 operates in conjunction with the user interface 40 and an address generator 44 to provide a device address, either directly or in a coded form. In particular, the address generator 44 generates the device address and this is provided to the user by means of the user interface.

As illustrated, a memory 46 is provided to store each generated device address in conjunction with the user profile. Preferably, the user profile includes a unique user name and password, the device being used (brand and model), the network reception (satellite, cable, terrestrial, Internet) in the case of hybrid devices and postal address of the device (to route information to the broadcasting network to which the device is connected). The broadcasting part of the system is illustrated schematically as broadcast device 48. This may obtain device addresses as required and include them with a stream of broadcast data so as to address particular broadcast receivers as required and direct appropriate data to those devices.

In the preferred embodiment, the address generator 44 generates a device address which is dependent on user name, brand, model and magic number. It can be 3DES-encrypted, where DES keys are only known to the device model.

EPG information can be broadcast for processing only by subscribers with the necessary decryption keys. Where a service uses the device addressing, this can be directed to only some of the EPG subscribers, for instance those who have a premium subscription. In this case, the decryption keys for the EPG information can be different to those for the addressing subscription.

The device address can be 32 bits long. As described above, this can be entered by the user by entering 10 digits.

The system as described above is particularly advantageous when used in conjunction with a subscription system. In particular, having obtained a device address for a particular device, the user of that device can subscribe to a particular service from the broadcaster.

Subscription to services is enabled by means of subscription keys. However, like the device address, the subscription key cannot be transmitted via the (broadcasting) network. To avoid the need of a back-channel, the arrangement as described above can be used to obtain not only the device address, but also to subscribe to the desired services.

Having obtained a device address, the user contacts the DASS 24 as illustrated in Figure 2 (again via the Internet, call centre, SMS, postcard, etc) to subscribe to the service required. Of course, this may require the user to provide his/her account details, payment, etc. The subscription key is then provided to the user and, as described above, for the device address, can be entered into the broadcast receiver 20 by means of the user interface 32.

As illustrated in Figure 3, the controller 30 is arranged to store the subscription key in the memory 34. However, alternatively, an additional memory can be provided for the subscription key, the additional memory similarly being a permanent memory which is resistant against updating and reset to factory operations.

In the broadcasting system of Figure 4, the user profile stored by the memory 46 may additionally include the bank account details of a user and any subscription keys required or e.g. credit/debit card details. Billing/payment may be carried out over a telephone network, for instance by means of a telephone network operator, e.g. using SMS.

The subscription keys may be dependent on the subscribed service, device address and subscription period. They can be 3DES-encrypted and be 32 bits long.

Preferably, the device address is used as at least part of a key to decode the subscription key. At the server/DASS side, the subscription key is generated using a stored device key to encrypt a random number to generate the subscription key.

In a preferred system, the broadcasting apparatus 22 broadcasts details of possible subscriptions to relevant broadcast receiver models by means of the device addresses. These possible subscriptions can be displayed on menus of the broadcast receivers having those device addresses.

Having obtained the appropriate subscription key in the manner described above, a broadcast receiver is then able to obtain the service from the broadcast stream using that subscription key.

Free or reduced cost trial subscriptions may be offered. For remote programming, the end of the trial period can be calculated on the DASS server, and the service disabled at the appropriate time. A default service could be, for instance, a 2-day or now/next EPG. A 7-day EPG could be a premium service which also required a subscription. In such circumstances the trial subscription could be managed by software on the broadcast receiver.

There is no need to remember any serial number or any other unique number from the broadcast receiver to get a device address or a subscription. The device addresses and subscription are known to a central server, ie the DASS 24, to control delivery of services. The subscription keys may be bound to the device addresses stored in the user profile in the broadcasting system as illustrated in Figure 4.

In the case of misuse of the device address, the user profile and the related device address can be easily blocked by the system.

Overall, the system allows device addressing and subscriptions without any Internet connection being necessary. Furthermore, no hardware or BIOS address is required and it is not necessary to remember serial numbers or similar information to subscribe to services.
Registration can be done without having access to the device, for instance at home or in the office and the device address is transferable to a new broadcast receiver in the case of exchange, for instance warranty.

Because the devices are addressable, it is possible to send specific messages to users or group of users (brand, model) which could be based on user profile information, e.g. country, brand, model or broadcasting network. These message services could also enable targeted advertisement.

Customer relationship management could be achieved by announcing firmware updates or promotion campaigns. One important application could also be to remind users to renew a subscription in case the subscription period is limited.

Furthermore, new services could be announced, especially if a theme-oriented recording scheme is implemented where new themes are available.

It will be appreciated that the system and method may be used in conjunction with a broadcast system where receivers with back-channel capabilities are present. For reasons of simplicity, a service provider may choose to implement device addressing in the manner described rather than implementing a system for addressing receivers involving use of a the back channel.

## Claims

1. A broadcast receiver including:
an address memory (34) arranged to store a device address;
a user interface (32) arranged to allow entry of a device address (34);
a controller (30) for storing an entered device address in the address memory (34); and
a receiver (36) for receiving a broadcast stream of data; wherein
the controller (30) is responsive to data in the broadcast stream which is received in association with a device address matching the device address stored in the address memory (34).

2. A broadcast receiver according to claim 1 wherein, as delivered, the address memory (34) does not contain a device address.

3. A broadcast receiver according to claim 1 or 2 wherein the device address is not related to any serial number of the broadcast receiver.

4. A broadcast receiver according to claim 1, 2 or 3 wherein the user interface (32) is arranged to provide a menu for a display, the menu guiding a user to enter the device address.

5. A broadcast receiver according to any preceding claim wherein the user interface (32) is arranged to provide for manual entry of the device address.

6. A broadcast receiver according to any preceding claim further including a remote control device (4, 8, 12), the user interface (32) being arranged to accept entry of the device address using the remote control device (4, 8, 12).

7. A broadcast receiver according to any preceding claim wherein the address memory (34) is resistant to software updates and operations to restore device settings to original factory settings.

8. A broadcast receiver according to any preceding claim for use with device addresses conforming to a predetermined scheme wherein the controller (30) is arranged to check an entered device address to confirm that it adheres to the scheme and, hence, validate the device address as a correct device address.

9. A broadcast receiver according to any preceding claim further including:
a key memory (32) arranged to store a subscription key; and
a decryption processor (36) for decrypting data received by the broadcast receiver; wherein
the user interface (32) is additionally arranged to allow entry of a subscription key;
the controller (30) is arranged to store an entered subscription key in the key memory (34); and
the decryption processor (36) decrypts data using the subscription key stored in the key memory (34).

10. A broadcast receiver according to claim 9 wherein subscription keys are bound to the device address.

11. A broadcast receiver according to any preceding claim having no output terminal for sending communication data to a broadcast service.

12. A broadcast receiver according to any preceding claim having no means for generating data for transmission to a broadcast service.

13. A broadcast receiver according to any preceding claim wherein the device address is provided in a coded form and the user interface (32) is arranged to allow entry of a device address in the coded form.

14. A broadcast receiver according to claim 13 wherein the controller (30) is arranged to decode the device address in the coded form to derive the device address itself.

15. A broadcast receiver according to any preceding claim wherein the controller (30) is arranged to control a recording device and, responsive to recording instruction data received in the broadcast stream in association with a device address matching the device address stored in the address memory (34), to operate the recording device.

16. A broadcast receiver according to any preceding claim further including a recording device operable under control of the controller (30).

17. A broadcast apparatus including:
a broadcast device (48) for broadcasting a broadcast stream of data;
an address generator (44) arranged to generate a unique device address;
a user interface (40) arranged to receive requests for device addresses; and
a controller (42) arranged to operate the address generator (44) to generate a device address in response to a request to the user interface (40); wherein
the user interface (40) is arranged to provide a device address generated by the address generator (44) in response to the request; and
the broadcast device (48) is arranged to broadcast at least some data in association with device addresses included in the broadcast stream.

18. A broadcast apparatus according to claim 17 wherein:
the broadcast device (48) is arranged to broadcast at least some services in an encoded form needing respective subscription keys for decoding;
the user interface (40) is additionally arranged to receive requests for subscription keys for subscriptions to respective services broadcast by the broadcast device; and
the controller (42) is arranged to control issue of subscription keys in connection with device addresses of users requesting the subscription keys; and
the user interface (40) is arranged to provide subscription keys for respective device addresses.

19. A broadcast apparatus according to claim 17 or 18 further including:
a memory (46) for storing a plurality of user profiles, each including a device address and details regarding the respective user.

20. A broadcast apparatus according to claim 17, 18 or 19 wherein the controller (42) is arranged to code the device address such that the user interface (40) provides the device address in a coded form.

21. A broadcast system including a broadcast apparatus according to claim 17, 18, 19 or 20 and one or more broadcast receivers according to any one of claims 1 to 16.

22. A method of broadcasting services selectively to individual broadcast receivers including:
allocating a device address to a broadcast receiver; and
providing the device address to the broadcast receiver and to a broadcast transmitter such that the broadcast transmitter can broadcast at least some data in association with device addresses in the broadcast stream.

23. A method of registering a broadcast receiver in a broadcast system so as to enable a broadcast transmitter to provide data in a unidirectional manner to the broadcast receiver, the method including:
requesting a device address for identifying a broadcast receiver;
receiving a device address generated in response to the request; and
storing the device address in a substantially permanent memory of the respective broadcast receiver wherein the broadcast receiver is able to receive data blocks including device addresses, to interpret said data blocks and to process only those data blocks with the device address of the respective broadcast receiver.

24. A method of reconfiguring a broadcast receiver having a device memory, a user interface, a controller, and a receiver to form a broadcast receiver according to any one of claims 1 to 16, the method including:
assigning at least part of the device memory to operate as the address memory and store a device address,
arranging the user interface to allow entry of a device address; and
arranging the controller to respond to data in the broadcast stream which is received in association with a device address matching the device address stored in the address memory.

25. A computer program comprising program code means for performing all the steps of claim 24 when said program is run on a computer.

26. A signal representative of the computer program of claim 25 suitable for reception by broadcast receivers, the computer program operable to reconfigure respective broadcast receivers.

27. A computer program product comprising program code means stored on a computer readable medium for performing the method of claim 24 when said program product is run on a computer.
